# EUROPEAN PATENT APPLICATION

(11) **EP 3 432 500 A1**
(43) Date of publication of application: **23.01.2019**
(21) Application number: 17305951.0
(22) Date of filing: 18.07.2017
(51) Int. Cl.: H04L 1/18, H04L 29/06, H04L 1/00, H04L 29/08

(54) **POINT-TO-POINT TRANSMITTING METHOD BASED ON THE USE OF AN ERASURE CODING SCHEME AND A TCP/IP PROTOCOL**

(71) Applicant: Institut Supérieur de l'Aéronautique et de l'Espace, 31055 Toulouse Cedex 4 (FR)
(72) Inventor: DETCHART, Jonathan, 31140 Aucamville (FR); LACAN, Jérôme, 31500 Toulouse (FR); LOCHIN, Emmanuel, 31200 Toulouse (FR)
(74) Representative: Tanguy, Yannick

(57) **Abstract**

A reliable point-to-point transmitting method of streamed source IP packets is implemented in telecommunication system that comprises a source sending device, a receiving device, a forward transmission path and a return path.

The transmitting method comprises steps of executing a transmitting part and receiving part of a second error recovery mechanism by respective second modules of the sending and receiving devices.

After receiving a current IP packet , when recovery of one or more IP lost source packets is possible by the second module of the receiving device, the second module of the receiving device either sets (112) a Congestion Experienced CE flag in an IP header field of the at least one of the recovered IP lost source packet(s) or reports inside an ECN field of the corresponding TCP header a virtual marked ECN bit of at least one of the recovered IP lost source packet(s) in order to activate the rate reduction at the sending device level.

## Description

### TECHNICAL FIELD OF THE INVENTION

The present invention concerns a reliable point-to-point transmitting method based on the joint use of an error recovery mechanism with the TCP protocol.

The present invention also concerns a telecommunication system using any telecommunication network that implements the reliable point-to-point transmitting method according to the invention.

### BACKGROUND OF THE INVENTION

There are two main types of Error Recovery Mechanism (ERM) to enable a reliable communication over a point-to-point erasure channel.

The first type of ERM is the Automatic Repeat reQuest denoted as ARQ in the following. ARQ enables a signaling return channel via a return transmission path from the receiving device and sends acknowledgment packets to feedback either well or not received packets at destination in order for the sender to retransmit missing packets to the destination.

The second type of ERM is Erasure Coding denoted as EC in the following. EC adds redundancy packets on a forward transmission path from a sending device to a receiving device to correct missing packets at destination. There are two main classes among erasure coding schemes: block codes and window codes.

Whatever the ERM type or the class of EC such as erasure block coding or erasure coding using a fixed window or an erasure coding using a sliding window, all permits a full or partial recovery of missing information. During an Internet Protocol IP based communication, whenever a packet is erased, ARQ allows the sender to retransmit lost packets while EC allows the destination to recover the lost ones, when possible, by sending inside the packets flows supplementary packets called redundancy packets or repair packets within the IP communication flow.

The Automatic Repeat reQuest (ARQ) is in particular implemented by the Transmission Control Protocol TCP, inside some link layer protocols and also by some block codes that enable both EC and ARQ and are known as Hybrid-ARQ.

Concerning EC, they are deployed at the application layer and implemented inside certain media applications, inside link and physical layers protocols.

Both ERM types, ARQ and EC, permit therefore to correct one or more lost packets when either a packet is dropped due to congestion, for example a packet may be dropped by a router when the routing queue is full, or the packet is corrupted during the transmission, for example a packet is modified or truncated by an interference which makes the packet unreadable at destination. In this context, ERMs make more reliable transmission channels.

Although these two types of ERM can be implemented at different layers of the OSI model, from the physical layer to the application layer, we focus on the case where end-to-end ERMs are implemented below the transport layer and in particular below the TCP protocol where their use generates some issues.

As previously said, TCP implements its own ERM mechanism, denoted ERM #1 in the following and based on ARQ. The ARQ mechanism used by TCP is tightly linked to another TCP algorithm called congestion control, which manages the TCP sending rate as a function of the network state to prevent network congestion. When a congestion event is detected, TCP halves its transmission rate (Multiplicative Decrease phase). A congestion event, can either be a duplicate acknowledgment packet that signals one or several lost packets (known as loss-based TCP), a specifying marking inside the TCP header known as Explicit Congestion Notification marking indicating that the network crossed becomes congested or finally and depending of the TCP version, an increase of the forwarding delay estimated by TCP (known as delay-based TCP). All TCP version can be either loss-based, delay-based or hybrid (delay and loss-based). However, all implements the ECN principle. Today in the Internet, only loss-based (GNU/Linux, *BSD, MAC OSX) or hybrid TCP (Windows) are used.

For a TCP loss-based flow, a network congestion means that a router queue on the path is full and thus, the router queue drops new arrival packets. To prevent congestion, TCP considers all lost packets as a congestion indication and follows an Additive Increase Multiplicative Decrease (AIMD) algorithm to compute its sending rate. Basically, TCP attempts to fetch the whole available link capacity by gradually increasing the TCP sending rate (Additive Increase phase). Since all TCP stacks in the Internet behave following the same principle, we observe in the long term behavior a fair-share between all TCP flows sharing the same bottleneck link. This algorithm is thus crucial for the sustainability of the Internet network.

However, losses could be either due to congestion or error links. Although congestion losses are pervasive over wired links, errors link usually occur over wireless links and are mostly due to fading, handover, mobility, etc.

As the differentiation between both kinds of losses is extremely complex nay impossible end-to-end without complex cross-layer mechanisms, TCP considers all losses as a congestion indication and always reacts by halving its sending rate. However, when link errors are pervasive, TCP is known to get poor performance as it indifferently reacts by halving its sending rate although these losses are not linked to congestion. To prevent this bad effect, one possible solution would be to add a supplementary ERM scheme below TCP, denoted ERM#2 in the following, to mask these losses. Usually, the kind of ERM used belongs to the second type of ERM. As a matter of fact, adjoining an end-to-end ERM, for instance an EC scheme over the full communication path below a TCP session, could help to recover partly or fully TCP missing packets. The problem of such a solution is that both kinds of losses (link errors and congestion losses) are potentially recovered by the ERM #2 scheme of second type. As a result, this would impact the TCP congestion control algorithm as TCP would become unaware of the state of the network; whether its current sending rate leads to congestion and thus could not react in consequence.

In order to solve the above technical problem, namely to make the TCP congestion control aware of the path losses in spite of their masking by an erasure coding mechanism, a novel implementation of the TCP protocol, named Coded TCP (CTCP) which uses a network on the fly erasure coding scheme known as RNLC ("Feedback-bases online network coding") and described in the patent document US 2010/0046371 A1, has been proposed. This CTCP solution is described in a second document from M. Kim et al., entitled "Network Coded TCP" and published in US 8130776 B1. Network Coded TCP is another variant of TCP and is not a mechanism that aims to be conjointly used within an existing TCP stack. This second document describes the necessary developments needed to implement a network coded TCP. As any kind of transport protocol, Network Coded TCP aims to be developed inside the kernel. However, as it is always difficult to convince operating system developers to implement a new mechanism inside the kernel of their own operating system, they alternatively propose a solution in the user-space on top of the UDP protocol. The authors provide all the algorithms to implement the whole TCP Network Coded stack. Once again, Network Coded TCP is a full TCP protocol. It means that it requires the implementation inside all operating systems to be broadly deployed and thus requiring operating systems designers to implement this proposal. Another limitation is that Coded TCP implements its own AIMD version while there are several kind of existing implementations and variants of this algorithm implemented and preferred by operating systems vendors. It would be much more convenient to interface an ERM scheme with any kind of existing TCP stacks and without modifying TCP internals.

The aim of the invention is therefore as a first technical problem to propose an alternative solution to Coded TCP that can be easily deployed and does not require any modification of the TCP protocol currently used in the Internet.

A second technical problem, more general than the first technical problem, is to propose a point-to-point IP transmitting method, based upon an ERM jointly used with an existing sender-based TCP protocol, and that overrides the issue of masking the path losses to the TCP control mechanism without modifying the TCP congestion control mechanism.

A third technical problem is also to provide a point-to-point IP transmitting method, based upon an ERM jointly used with an existing sender-based TCP protocol, that preserves the TCP fair-share property and that increases the packets delivery ratio, the packet delivery ratio being the ratio of packets that are successfully delivered to a destination compared to the number of packets that have been sent by the sender.

### SUMMARY OF THE INVENTION

The invention aims at solving the first technical problem and the second technical problem.

To this end, the invention relates to a point-to-point method for transmitting reliably a stream of source IP packets packets between a source sending device and a receiving device through an interconnecting network, the interconnecting network including a forward transmission path from the source sending device to the receiving device and a return path from the receiving device to the source sending device, the source sending device being configured for sending source IP packets and/or repair packets, the receiving device being configured for receiving the source IP packets and/or the repair packets and recovering source IP packets. The source sending device and the receiving device implements: through the use of a first dedicated hardware and/or software module a Transport Control Protocol TCP including an ARQ first error recovery mechanism ERM #1, and through the use of a second dedicated hardware and/or software module a second error recovery mechanism ERM #2. The source sending device and the receiving device are compatible to manage an IP Explicit Congestion Notification (ECN) mechanism. The transmitting method comprises the steps consisting in that:
.- the second module of the sending device converts TCP packet(s) into source IP packets and/or repair packet(s) on the basis of the second error recovery mechanism ERM #2, and sends the said source and /or repair packet(s) on the forward transmission path to the receiving device; then
.- the second module of the receiving device receives the source IP packet(s) and/or the repair packet(s) sent through the forward transmission path.

The transmitting method is characterized in that it comprises the steps consisting in that:
.- upon receiving a current IP packet when a recovery of one or more IP lost source packets by the second error recovery mechanism ERM #2 is possible the second module of the receiving device executes the recovery of the IP lost source packet(s), then
.- either sets an actual Congestion Experienced CE flag in an IP header field of at least one of the recovered IP lost source packet(s) in order to activate the rate reduction at the sending device level, and transmits the recovered IP lost packet(s) with the at least one CE flag set therein to the IP layer of the second module for a reporting of the marked ECN bit CE inside an ECN field of the corresponding TCP header;
.- or reports inside an ECN field of the corresponding TCP header, a virtual marked ECN bit of at least one of the recovered IP lost source packet(s) in order to activate the rate reduction at the sending device level, and transmits the TCP recovered lost packet(s) with the at least one reporting bit of the virtual marked ECN bit CE set inside the corresponding TCP header(s).

According to further aspects of the invention which are advantageous but not compulsory, the point-to-point transmitting method might incorporate one or several of the following features, taken in any technically admissible combination:
.- the point to point transmitting method comprising further the steps consisting in that the first module of the receiving device processes the reporting bit(s) of the actual or virtual marked ECN bits CE set inside the corresponding TCP header(s) and feeds back these ECN signals to the sending device through the return transmission path following a method compliant with the standard the RFC 3168;
.- after the reporting of the actual or virtual marked ECN bits CE set inside the corresponding TCP header(s) and before the processing of the reporting bit(s), the second module of the receiving device transmits the recovered TCP lost packet(s) with the actually marked ECN bit CE reported inside the ECN field of the TCP header or the virtually marked ECN bit reported inside the ECN field of the TCP header, or the source TCP/IP packet(s) correctly received;
.- upon receipt of the recovered TCP lost packet(s) with at least one reporting bit of the actual or virtual marked ECN bit CE set inside the corresponding TCP header(s), the first module of the receiving device determines that the TCP reporting bit of the actual Im or virtual IP CE flag is set, and in a TCP header of a corresponding acknowledgment packet sets an Explicit Congestion Notification Echo ECE flag compliant with the standard RFC 3168, and transmits the acknowledgment packet to the sending source device;
.- upon receipt of the acknowledgment packet with the ECE flag set, the source sending device takes prescribed steps to reduce the rate at which it transmits IP packets;
.- the second error recovery mechanism ERM #2 is a mechanism comprised in the set of the erasure on-the-fly encoding/decoding algorithms, the block encoding/decoding algorithms, the mere Automatic Repeat reQuest (ARQ) algorithms, and the hybrid Automatic Repeat reQuest (ARQ) control algorithms using Forward Error Coding, and the first error recovery mechanism ERM #1 is a standard TCP Automatic Repeat reQuest (ARQ) control algorithm;
.- upon receiving a current IP packet among a source IP packet and a repair packet, when recovery of one or more IP lost source packets by the second error recovery mechanism ERM #2 is possible, the second module of the receiving device executes the recovery of the IP lost source packet(s), then sets an actual Congestion Experienced CE flag in an IP header field of at least one of the recovered IP lost source packet(s) in order to activate the rate reduction at the sending device level, and transmits the recovered IP lost packet(s) with the at least one CE flag set therein to the IP layer of the second module for a reporting of the marked ECN bit CE inside an ECN field of the corresponding TCP header;
.- upon receiving a current IP packet among a source IP packet and a repair packet, when recovery of one or more IP lost source packets by the second error recovery mechanism ERM #2 is possible, the second module of the receiving device executes the recovery of the IP lost source packet(s); then reports inside an ECN field of the corresponding TCP header, a virtual marked ECN bit of at least one of the recovered IP lost source packet(s) in order to activate the rate reduction at the sending device level, and transmits the TCP recovered lost packet(s) with the at least one reporting bit of the virtual marked ECN bit CE set inside the corresponding TCP header(s);
.- when the current source IP packet(s) is or are not recovered lost source IP packets but source IP packet(s) correctly received, the second module of the receiving device forwards the received decoded current source IP packet to the first module either directly or through the standard IP layer stack of the second module;
.- in case the source IP packet correctly received is forwarded directly to the IP layer of the second module of the receiving device, there is no altering of the logical status of the Congestion Experienced CE flag inside the IP header field of the forwarded current IP packet, and the IP layer executes as prescribed by the RFC 3168 the reporting of the CE bit inside the ECN field of the TCP header; and in case the source IP packet correctly received is forwarded directly to the first module, before the said forwarding the second module reports the actual CE bit status in the ECN field of the TCP header.

The invention also relates to a telecommunication system for point-to-point transmitting a stream of source IP packets comprising: a source sending device for sending source IP packets and /or repair packets(s), a receiving device for receiving the source IP packet and/or the repair packets and recovering source IP packets, a forward transmission path from the source sending device to the receiving device, and a return path from the receiving device to the source sending device. The source sending device and the receiving device have each a first dedicated hardware and/or software module implementing a Transport Control Protocol TCP including an ARQ first error recovery mechanism ERM #1, and a second dedicated hardware and/or software module implementing a second error recovery mechanism ERM #2. The source sending device and the receiving device are compatible to manage an IP Explicit Congestion Notification (ECN) mechanism. The second module of the source sending device is configured for: converting TCP packet(s) into source IP packet(s) and/or repair packet(s) on the basis of second error recovery mechanism ERM #2; then sending the source IP and repair packet(s) on the forward transmission path to the receiving device. The second module of the receiving device is configured for : receiving the source IP packet(s) and/or the repair packet(s) sent through the forward transmission path. The telecommunications system is characterized in that the second module of the receiving device is configured for:
.- upon receiving a current IP packet, when a recovery of one or more IP lost source packets by the second error recovery mechanism ERM #2 is possible, executing the recovery of the IP lost source packet(s), then,
.- either setting an actual Congestion Experienced CE flag in an IP header field of at least one of the recovered IP lost source packet(s) in order to activate the rate reduction at the sending device level, and transmits the recovered IP lost packet(s) with the at least one CE flag set therein to the IP layer of the second module for a reporting of the marked ECN bit CE inside an ECN field of the corresponding TCP header;
.- or reporting inside an ECN field of the corresponding TCP header, a virtual marked ECN bit of at least one of the recovered IP lost source packet(s) in order to activate the rate reduction at the sending device level, and transmitting the TCP recovered lost packet(s) with the at least one reporting bit of the virtual marked ECN bit CE set inside the corresponding TCP header(s).

According to further aspects of the invention which are advantageous but not compulsory, the telecommunication system might incorporate one or several of the following features, taken in any technically admissible combination:
.- the first module of the receiving device is configured for processing the reporting bit(s) of the actual or virtual marked ECN bits CE set inside the corresponding TCP header(s) and feeding back these ECN signals to the sending device through the return transmission path following a method compliant with the standard the RFC 3168;
.- the second module of the receiving device is configured for, after the reporting of the actual or virtual marked ECN bits CE set inside the corresponding TCP header(s) and before the processing of the reporting bit(s) by the first module of the receiving device, transmitting the recovered TCP lost packet(s) with the actually marked ECN bit CE reported inside the ECN field of the TCP header or the virtually marked ECN bit reported inside the ECN field of the TCP header, or the source TCP/IP packet(s) correctly received to the first module of the receiving device;
.- the first module of the receiving device is configured for, upon receipt of the recovered TCP lost packet(s) with at least one reporting bit of the actual or virtual marked ECN bit CE set inside the corresponding TCP header(s), determining that the TCP reporting bit of the actual Im or virtual IP CE flag is set, and in a TCP header of a corresponding acknowledgment packet setting an Explicit Congestion Notification Echo ECE flag compliant with the standard RFC 3168, and transmitting the acknowledgment packet to the sending source device;
.- the source sending device is configured for, upon receipt of the acknowledgment packet with the ECE flag set, taking prescribed steps to reduce the rate at which it transmits IP packets;
.- the second error recovery mechanism ERM #2 is a mechanism comprised in the set of the erasure on-the-fly encoding/decoding algorithms, the block encoding/decoding algorithms, the mere Automatic Repeat reQuest (ARQ) algorithms, and the hybrid Automatic Repeat reQuest (ARQ) control algorithms using Forward Error Coding, and the first error recovery mechanism ERM #1 is a standard TCP Automatic Repeat reQuest (ARQ) control algorithm.

### BRIEF DESCRIPTION OF THE DRAWINGS

The invention will be better understood on the basis of the following description which is given in correspondence with the annexed figures and as an illustrative example, without restricting the object of the invention. In the annexed figures:
- Figure 1 is a view of a general architecture of a telecommunication system according to the invention;
- Figure 2 is a view of a first embodiment of the telecommunication system according to the invention and of the interconnections between the sending source device and the receiving device according to the OSI model;
- Figure 3 is a view of a second embodiment of the telecommunication system according to the invention and of the interconnections between the sending source device and the receiving device according to the OSI model;
- Figure 4 is a view of an exemplary IP header incorporating a first Explicit Congestion Notification (ECN) field;
- Figure 5 is a general flow chart of a point-to-point transmitting method according the invention implemented in the telecommunication system of Figure 1;
- Figure 6 is an operating view of the point-to-point transmitting method of Figure 5 implemented in the telecommunication system of Figure 2, the forward transmission path incorporating a non-ECN capable router;
- Figure 7 is an operating view of the point-to-point transmitting method of Figure 5 implemented in the telecommunication system of Figure 2, the forward transmission path incorporating a non-ECN capable router;
- Figure 8 is a flow chart of a particular point-to-point transmitting method according the invention that uses an on-the-fly erasure coding/decoding scheme and that is implemented in the telecommunication system of Figure 1.

### DETAILED DESCRIPTION OF SOME EMBODIMENTS

The ubiquitous Transmission Control Protocol pervasively used on many networks today provides mechanisms for ensuring the proper delivery of information, detecting congestion, and adjusting the rate at which senders transmit information while the Internet Protocol (IP) takes in charge the routing of the packets. Both the Transmission Control Protocol and the Internet Protocol specify packets headers format. For example, TCP headers include identification information and various flags that can specify the type of packet. Similarly, IP headers include information specifying the IP addresses of the sending and receiving devices as well as various flags providing information on the packet. TCP can acknowledge data by sending an acknowledgment that specifies the offset in the data-stream until which the destination has received data. Such an acknowledgment packet has the ACK flag in the TCP header set and specifies the next expected sequence number in the byte-stream via the acknowledgment number in the TCP header. The acknowledgment packets can be used by the sending device to adjust the rate at which it transmits packets. For example, the sending device can decrease the rate at which it transmits packets if it has not received any acknowledgment packets for a predefined number of transmitted packets. Additionally, the sending device can decrease the rate at which it transmits packets if next received acknowledgment packets continually indicate that some transmitted packets have not been delivered.

In addition to providing mechanisms by which delivered information can be acknowledged and the rate of transmitted information can be adjusted, TCP and IP, implements the Explicit Congestion Notification (ECN) scheme.

Explicit Congestion Notification (ECN) is a scheme allowing to notify congestion occurring at the network layer preventively to a TCP source. The current version is specified in RFC 3168. Practically, the IP header contains a two-bit ECN field, consisting of the ECN-Capable Transport (ECT) bit and the Congestion Experienced (CE) bit. The ECT bit is set by a sender to indicate to routers or any ECN-compliant networking layer devices that it is able to use the ECN mechanism while the CE bit is marked to notify congestion. The TCP header contains additional two bits: the ECN-Echo bit (ECE) and the Congestion Window Reduced (CWR) bit.

Basically the principle is as follows: an ECN-enable networking device (such as a router) sets the CE bit in the IP header when they might otherwise drop the packet; or possibly when the queue is at least half full; or for any other reason implying a decision to decrease TCP sources sending rate.

Once the destination receiver receives the packet, the IP layer reports the ECN mark inside the TCP header to make the mark visible to TCP.

Then, receiver echoes the CE status back to the sender in the ECE bit of the next ACK; the reason for using the ECE bit is that this bit belongs to the TCP header and thus the TCP layer can be aware of this congestion indication. TCP senders treat ACKs with the ECE bit set the same as if a loss occurred and halves its congestion window (i.e. its sending rate). Because there is no actual loss, the arriving ACKs can still pace continued sliding-windows sending. The TCP Fast Recovery mechanism is not needed. When the TCP sender has responded to an ECE bit, it sets the CWR bit. Once the receiver has received a packet with the CE bit set in the IP layer, it sets the ECE bit in all subsequent ACKs until it receives a data packet with the CWR bit set. This provides for reliable communication of the congestion information, and helps the sender respond just once to multiple packet losses within a single windowful.

Note that the initial packet marking is done at the IP layer, but the generation of the marked ACK and the sender response to marked packets is at the TCP layer.

Only a packet that would otherwise have been dropped has its CE bit set; the networking ECN-compliant device does not mark all waiting packets once its queue reaches a certain threshold. Any marked packet must, as usual, wait in the queue for its turn to be forwarded. The sender finds out about the congestion after one full RTT, versus one full RTT plus four packet transmission times for Fast Retransmit. Because ECN congestion is treated the same way as packet drops, ECN competes fairly with TCP.

The main concept of invention lays on ECN mechanism and proposes to enable the use of this signaling mechanism by an ERM below the TCP transport layer. Note that the invention does not require the collaboration of any intermediate routers and only implements the ECN marking procedure as defined in RFC 3168. The way to use the ECN principle follows the RFC 3168 and remains independent from the design of the operating system and/or Internet related components.

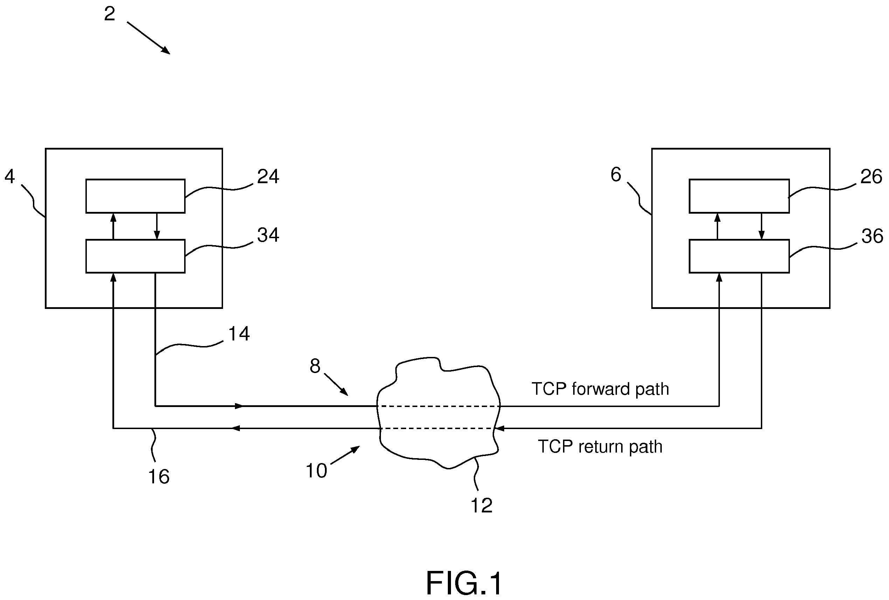

According to Figure 1, a telecommunication system 2 according to the invention comprises:
.- a source sending device 4 for sending source IP packets and/or repair packets,
.- a receiving device 6 for receiving the source IP packets and/or the repair packets and recovering the source IP packets,
.- a forward transmission path 8 from the source sending device 4 to the receiving device 6, and
.- a return transmission path 10 from the receiving device 6 to the source sending device 4.

The telecommunication system 2 comprises a routing network 12 interconnecting the source sending device 4 and the receiving device 6. The routing network 12 can comprise at least one transit node(s) such as a router or a repeater for example. The routing network can be also merely restricted to two transmission links.

The forward transmission path 8 here is made with a forward link 14 from the source sending device 4 to the receiving device 6 through the routing network 12..

The return transmission path 10 is made with a return link 16 from the receiving device 6 to the source sending device 4 through the routing network 12.

The source sending device 4 and the receiving device 6 have each a first dedicated hardware and/or software module 24, 26 implementing a Transport Control Protocol TCP and its ARQ error mechanism forming a first error recovery mechanism ERM #1 of first type.

The source sending device 4 and the receiving device 6 have each a second dedicated hardware and/or software module 34, 36 implementing a second error recovery mechanism ERM #2 of first type ARQ or second type EC.

The first error recovery mechanism ERM #1, i.e. the standard TCP Automatic Repeat reQuest (ARQ) control is applied to the correctly received source IP packets and the recovered source IP packets from the second error recovery error mechanism ERM #2.

The second error recovery mechanism ERM #2 is based on an erasure on-the-fly encoding/decoding scheme (also called elastic window encoding/decoding scheme), or a block encoding/decoding scheme, or a mere second Automatic Repeat reQuest (ARQ) control scheme, or an hybrid Automatic Repeat reQuest (ARQ) control scheme using Forward Error Coding.

The sending device 4 is configured for:
- at a transport layer, i.e. at the layer 4 of the OSI (Open Systems Interconnection) model, converting incoming source application data packets into TCP source packets,
- at a IP layer level, i.e. at the layer 3 level of the OSI model, converting the TCP source packets into source IP packets and/or IP repair packets by using the second error recovery mechanism ERM #2; then
- sending the source IP packets and/or repair packets on the forward transmission path 14.

The receiving device 6 is configured for:
.- at the IP layer level, receiving the source IP packets and/or repair packets and recovering the detected lost source IP packets by using the second error recovery mechanism ERM #2; then
.- processing the correctly received source IP packets and the recovered source IP packets at IP layer level and at TCP higher level.

The second module 36 of the receiving device 6 is configured for:
.- upon receiving a current IP packet, i.e. a source IP packet or a repair packet, when recovery of one or more IP lost source packets by the second error recovery mechanism ERM #2 is possible, executing the recovery of the IP lost source packet(s); then
.- either setting an actual Congestion Experienced CE flag in an IP header field of at least one of the recovered IP lost source packet(s) in order to activate the rate reduction at the sending device level 4, and transmitting the recovered IP lost packet(s) with the at least one CE flag set therein to the IP layer of the second module 36 for a reporting of the marked ECN bit CE inside an ECN field of the corresponding TCP header;
.- or reporting, inside an ECN field of the corresponding TCP header, a virtual marked ECN bit of at least one of the recovered IP lost source packet(s) in order to activate the rate reduction at the sending device level 4, and transmitting the TCP recovered lost packet(s) with the at least one reporting bit of the virtual marked ECN bit CE set inside the corresponding TCP header(s).

The first module 26 of the receiving device 6 is configured for processing the reporting bit(s) of the actual or virtual marked ECN bits CE set inside the corresponding TCP header(s) and feeds back these ECN signals to the sending device 4 through the return transmission path 10 following any method compatible with the RFC 3168.

As an example, the first module 26 of the receiving device is configured for:
.- upon receipt of the recovered TCP lost packet(s) with at least one reporting bit of the actual or virtual marked ECN bit CE set inside the corresponding TCP header(s), determining that the TCP reporting bit of the actual or virtual IP CE flag is set, and in a TCP header of a corresponding acknowledgment packet setting an Explicit Congestion Notification Echo ECE flag compliant with the RFC 3168; then
.- transmitting the said acknowledgment packet wherein the Explicit Congestion Notification Echo ECE flag is set to the source sending device 4 through the return transmission path 10.

The source sending device 4 is configured for, upon receiving the feedback ECN signals, taking prescribed steps to reduce the sending rate at which the source sending device 4 transmits packets, these prescribed steps being compliant with the RFC 3168.

As an example, the source sending device is configured for:
.- upon receipt of the acknowledgment packet with the ECE flag set therein, taking prescribed steps to reduce the sending rate at which the source sending device 4 transmits packets.

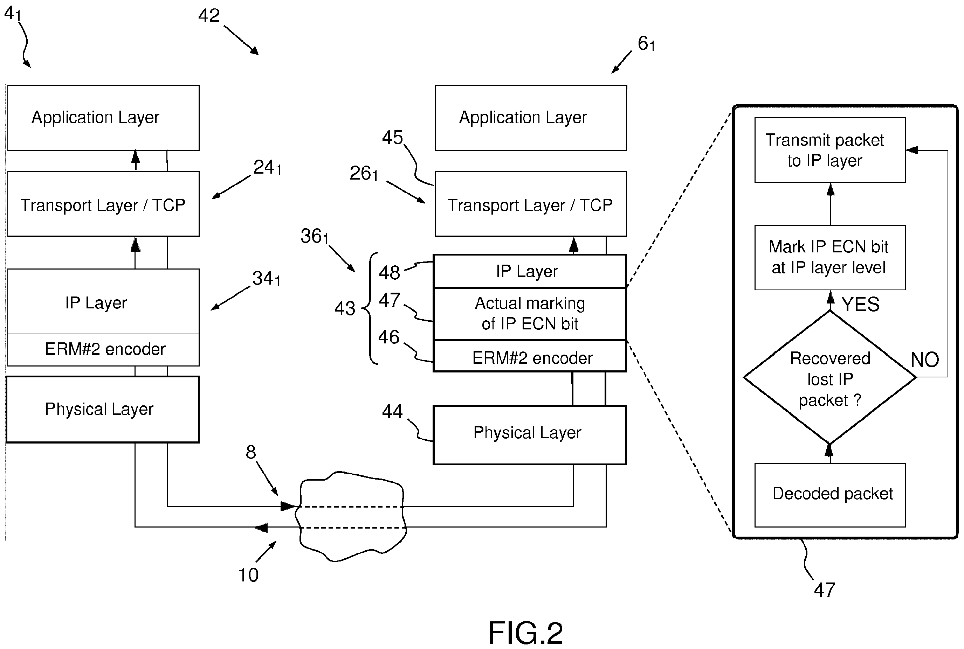

According to Figure 2 and a first particular embodiment of the telecommunication system 2 of Figure 1, a telecommunication system 42 according to the invention comprises:
.- a source sending device 4₁ for sending source IP packets and/or repair packets,
.- a receiving device 6₁ for receiving the source IP packets and/or the repair packets and recovering the source IP packets,
.- the forward transmission path 8 from the source sending device 4₁ to the receiving device 6₁, and
.- the return transmission path 10 from the receiving device 6₁ to the source sending device 4₁.

The source sending device 4₁ and the receiving device 6₁ have each a first dedicated hardware and/or software module 24₁, 26₁ implementing a Transport Control Protocol TCP and its ARQ error mechanism forming a first error recovery mechanism ERM #1 of first type.

The source sending device 4₁ and the receiving device 6₁ have each a second dedicated hardware and/or software module 34₁, 36₁ implementing a second error recovery mechanism ERM #2 of first type ARQ or second type EC.

The first dedicated hardware and/or software module 24₁, 26₁ and the second dedicated hardware and/or software module 34₁ are respectively identical to the first dedicated hardware and/or software module 24, 26 and the second dedicated hardware and/or software module 34 as described in Figure 1.

The second dedicated hardware and/or software module 36₁ corresponds to a first configuration of the second module 36 of the receiving device 6 and is configured for:
.- upon receiving a current IP packet, i.e. a source IP packet or a repair packet, when recovery of one or more IP lost source packets by the second error recovery mechanism ERM #2 is possible, executing the recovery of the IP lost source packet(s); then
.- setting an actual Congestion Experienced CE flag in an IP header field of at least one of the recovered IP lost source packet(s) in order to activate the rate reduction at the sending device level 4₁, and transmitting the recovered IP lost packet(s) with the at least one CE flag set therein to the IP layer of the second module 36₁ for a reporting of the marked ECN bit CE inside an ECN field of the corresponding TCP header.

The stacks 43 at IP layer (OSI layer 3) forming the second module 36₁ and comprised between the Physical layer stack 44 and the transport layer/ TCP stack 45 comprises a second error recovery mechanism ERM #2 decoder 45, followed subsequently by an actual marking 46 of IP ECN bit inside the IP header and a predetermined IP layer stack 47 compliant with the RFC 3168.

The actual marking of IP ECN bit stack 46, sandwiched between the ERM#2 decoder 45 and IP layer stack 47, is conditioned to the recovery status of the decoded IP packets.

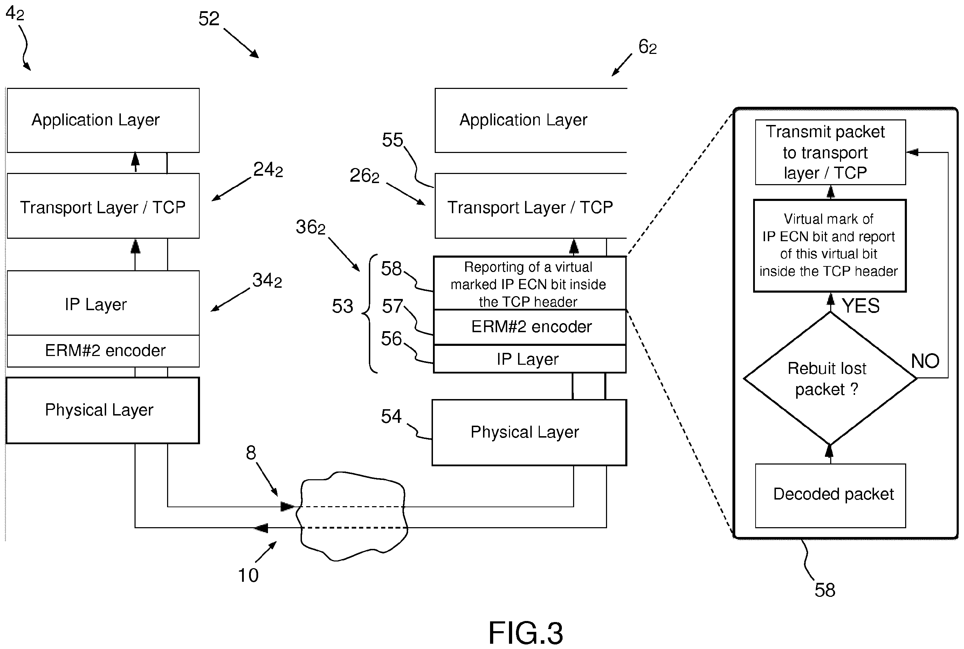

According to Figure 3 and a second particular embodiment of the telecommunication system 2 of Figure 1, a telecommunication system 52 according to the invention comprises:
.- a source sending device 4₂ for sending source IP packets and/or repair packets,
.- a receiving device 6₂ for receiving the source IP packets and/or the repair packets and recovering the source IP packets,
.- the forward transmission path 8 from the source sending device 4₂ to the receiving device 6₂, and
.- the return transmission path 10 from the receiving device 6₂ to the source sending device 4₂.

The source sending device 4₂ and the receiving device 6₂ have each a first dedicated hardware and/or software module 24₂, 26₂ implementing a Transport Control Protocol TCP and its ARQ error mechanism forming a first error recovery mechanism ERM #1 of first type.

The source sending device 4₂ and the receiving device 6₂ have each a second dedicated hardware and/or software module 34₂, 36₂ implementing a second error recovery mechanism ERM #2 of first type ARQ or second type EC.

The first dedicated hardware and/or software module 24₂, 26₂ and the second dedicated hardware and/or software module 34₂ are respectively identical to the first dedicated hardware and/or software module 24, 26 and the second dedicated hardware and/or software module 34 as described in Figure 1.

The second dedicated hardware and/or software module 36₂ corresponds to a second configuration of the second module 36 of the receiving device 6 and is configured for:
.- upon receiving a current IP packet, i.e. a source IP packet or a repair packet, when recovery of one or more IP lost source packets by the second error recovery mechanism ERM #2 is possible, executing the recovery of the IP lost source packet(s); then
.- reporting, inside an ECN field of the corresponding TCP header, a virtual marked ECN bit of at least one of the recovered IP lost source packet(s) in order to activate the rate reduction at the sending device level 4₁, and transmitting the TCP recovered lost packet(s) with the at least one reporting bit of the virtual marked ECN bit CE set inside the corresponding TCP header(s).

The stacks 53 at IP layer (OSI layer 3) forming the second module 36₂ and comprised between the Physical layer stack 54 and the transport layer/ TCP stack 55 comprises a predetermined IP layer stack 55 compliant with the RFC 3168, followed subsequently by a second error recovery mechanism ERM #2 decoder 56 and a reporting 57 of a virtual marked IP ECN bit inside the TCP header.

The actual marking of IP ECN bit stack 47, sandwiched between the ERM#2 decoder 46 and IP layer stack, is conditioned to the recovery status of the decoded IP packets.

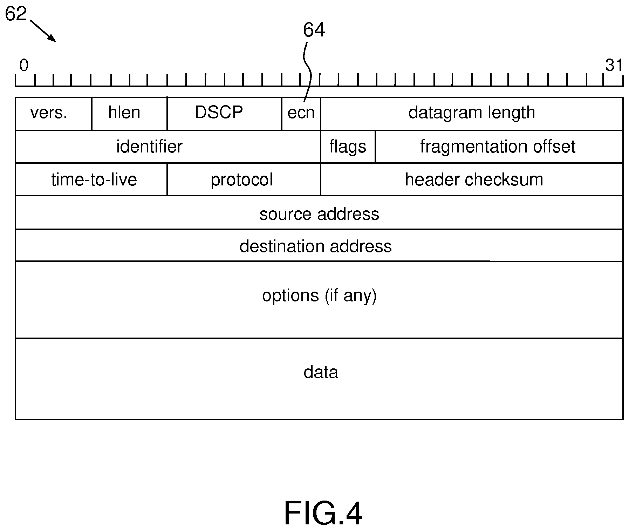

According to Figure 4 and an example of IP header 62, here the IP header of the version 4 of the IP protocol IPv4, a first Explicit Congestion Field 64 of two bits corresponding the 15^{th} and 16^{th} bit of the IP header comprises the Congestion Experienced flag that corresponds to the 16^{th} bit and is set to 1 when a congestion or a transmission error experience is notified to the second module of the receiving device.

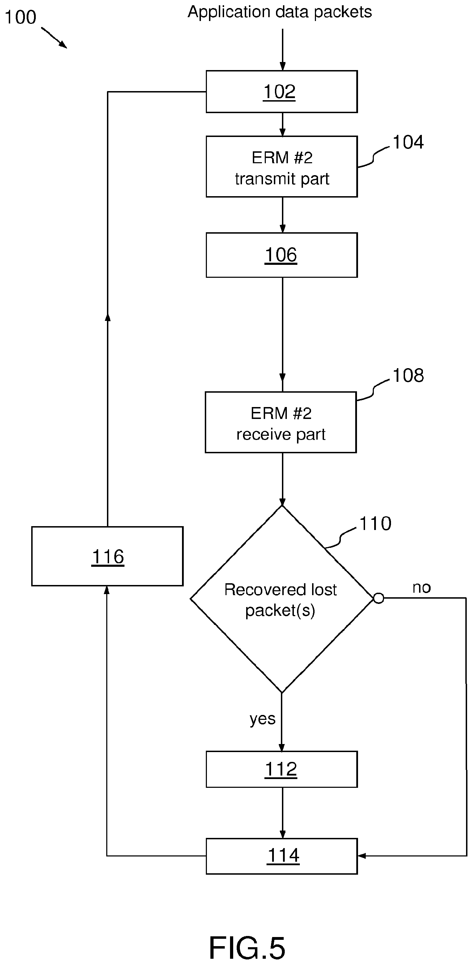

According to Figure 5 and the invention, a point-to-point transmitting method 100 for transmitting reliably a stream of source IP packets is implemented by the telecommunications system 2 of Figure 1.

The transmitting method 100 comprises a set of steps.

In a TCP and first step 102, the first dedicated hardware and/or software module 24 of the sending device 4 receives new incoming source IP application data packet(s) from the sender application layer (not shown in the Figure 5) and TCP acknowledgment packet(s), and processes the new incoming source application data packet(s) and TCP acknowledgment packet(s) according to TCP to generate new or repeated sender TCP/IP packets.

Then, in a second step 104 of implementing a transmit part of the second error recovery mechanism ERM#2, the second dedicated hardware and/or software module 34 of the sending device 4 converts the new or repeated sender TCP/IP packets into source IP packets and/or repair packets on the basis of a second error recovery mechanism ERM #2.

The second error recovery mechanism ERM #2 is based as an EC on an erasure on-the-fly encoding/decoding scheme (also called elastic window encoding/decoding scheme or a block encoding/decoding scheme or an hybrid Automatic Repeat reQuest (ARQ) control scheme using Forward Error Coding, or is based on a second standalone Automatic Repeat reQuest (ARQ) control scheme given that the TCP uses a first Automatic Repeat reQuest (ARQ) control scheme as ERM#1.

In the case the second error recovery mechanism ERM #2 is based on a block encoding/decoding scheme, the second dedicated hardware and/or software module 34 of the sending device 4 will not use for this second encoding step 104 any implicit information provided by the repeated TCP/IP packets.

Then, in a third step 106, the sending device 4 sends the source IP packet(s) and/or the repair packet(s) on the forward transmission path 8.

Then, in a fourth step 108 of executing a receive and decoding part of the second error recovery mechanism ERM #2, the second dedicated hardware and/or software module 36 of the receiving device 6 receives the source IP packet(s) and/or the repair packet(s) sent through the forward transmission path 8, recovers the lost source IP packet(s) by using the second error recovery mechanism ERM #2 when a recover becomes possible, and keeps ready to be forwarded to the first module 26 or the layer IP stack of the second module 36 the current source IP packet correctly received or the current recovered lost source IP packets.

No repair packet is forwarded by the second module to the first module.

In a subsequent fifth step 110, it is determined by the second module 36 of the receiving device 6 whether the current source IP packet(s) is (or are) source IP packet(s) correctly received or is (or are) recovered lost packet(s).

When the current source IP packet(s) is or are recovered lost packet(s), in a sixth step 112 the second module 36 of the receiving device 6:
.- either sets an actual Congestion Experienced CE flag in an IP header field of at least one of the recovered IP lost source packet(s) in order to activate the rate reduction at the sending device level, and transmits the recovered IP lost packet(s) with the at least one CE flag set therein to the IP layer of the second module 36 for a reporting of the marked ECN bit CE inside an ECN field of the corresponding TCP header(s); or
.- reports, inside an ECN field of the corresponding TCP header(s), a virtual marked ECN bit of at least one of the recovered IP lost source packet(s) in order to activate the rate reduction at the sending device level.

Then in the same sixth step 112, the second module 36 of the receiving device 6 transmits the recovered TCP lost packet(s) with the actually marked ECN bit CE reported inside the ECN field of the TCP header or the virtually marked ECN bit reported inside the ECN field of the TCP header, or the source TCP/IP packet(s) correctly received.

Then, upon receipt of the recovered TCP lost packets packet(s) and in a seventh step 114, the first module 26 of the receiving device 6 processes the reporting bit(s) of the actual or virtual marked ECN bits CE set inside the corresponding TCP header(s).

Then in an eight step 116, the first module 26 of the receiving device 6 feedbacks these ECN signals to the sending device 4 through the return transmission path 10 following any method compatible with the RFC 3168.

As an example, upon receipt of the recovered TCP lost packet(s) with at least one reporting bit of the actual or virtual marked ECN bit CE set inside the corresponding TCP header(s), the first module 26 of the receiving device determines that the TCP reporting bit of the actual or virtual IP CE flag is set, and in a TCP header of a corresponding acknowledgment packet sets an Explicit Congestion Notification Echo ECN-E flag compliant with the RFC 3168.

Then, the first module 26 of the receiving device 6 transmits the said acknowledgment packet wherein the Explicit Congestion Notification Echo ECN-E flag is set to the source sending device 4 through the return transmission path 10.

Upon receiving the feedback ECN signals, the source sending device 4 takes in the first step 102 prescribed steps to reduce the sending rate at which the source sending device 4 transmits packets, these prescribed steps being compliant with the RFC 3168.

As an example, upon receipt of the acknowledgment packet with the ECN-E flag set therein the source sending device 4 takes prescribed steps to reduce the sending rate at which the source sending device 4 transmits packets.

When the current source IP packet(s) is or are not recovered lost source IP packets but source IP packet(s) correctly received, the second module 36 of the receiving device 6 forwards directly to the first module or to the IP layer stack the received decoded current IP packet.

In case the source IP packet correctly received is forwarded directly to the IP layer, there is no altering the logical status of the ECN field corresponding to the Congestion Experienced CE flag in the IP header field of the forwarded current IP packet, and the IP layer executes as prescribed by the RFC 3168 the reporting of the CE bit inside the ECN field of the TCP header.

In case the source IP packet correctly received is forwarded directly to the first module 26, before the forwarding the second module 36 reports the actual CE bit status in the ECN field of the TCP header.

Then, upon receipt of the forwarded decoded current source TCP/IP packet and in a seventh step 114, the first module 26 of the receiving device 6 processes the reporting bit(s) of the actual ECN bits CE set inside the corresponding TCP header(s).

Then in the eight step 116, the first module 26 of the receiving device 6 feeds back these ECN signals to the sending device 4 through the return transmission path 10 following any method compatible with the RFC 3168.

As an example, in case a CE flag has been set by an ECN capable router, the first module 26 of the receiving device 6 detects this set CE flag and in the TCP header of an acknowledgment packet sets an Explicit Congestion Notification Echo ECE flag according to an established Explicit Congestion Notification mechanism of the Transport Control Protocol TCP. In case no CE flag has been set previously, the first module 26 of the receiving device 6 does not activate Explicit Congestion Notification Echo ECE flag in an acknowledgment packet.

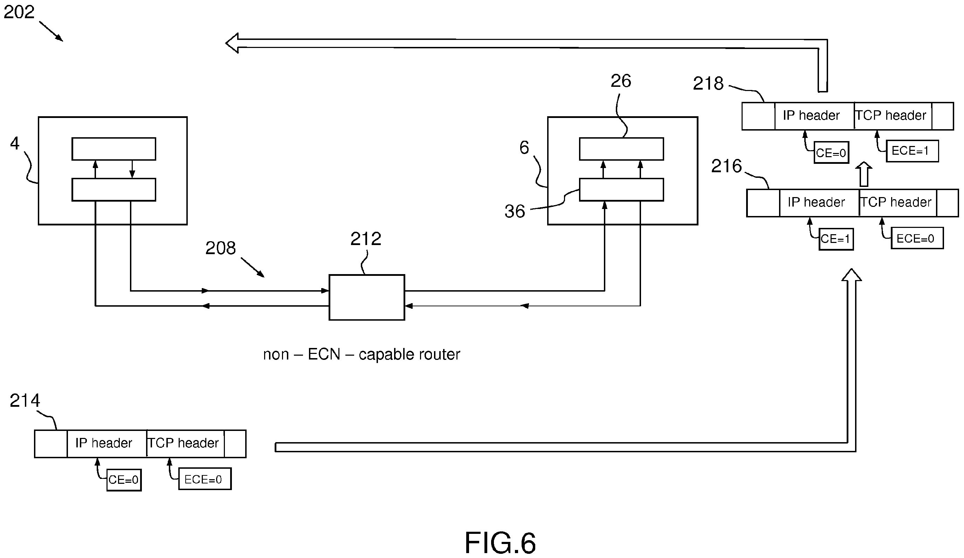

According to Figure 6, the point-to-point transmission method according to the invention as described in figure 5 combines a second Error Recovery Mechanism ERM #2, for instance an erasure coding EC scheme, and a TCP/IP Explicit Congestion Notification mechanism. This point-to-point transmission is carried out by a telecommunication system 202 similar to the system 2 of Figure 1. Regardless of the structure of the routing network 12 that may comprise non ECN-capable router(s) or not, in any case the method according to the invention permits to anticipate and avoid network congestion caused by a queue overflow and/or transmission errors.

In order to demonstrate this ability, it is assumed here that forward transmission path 208 comprises at least one intermediate network device 212 that is non ECN-capable, as a non ECN-capable router for example.

As shown in the Figure 6, the source sending device 4 forms a source IP packet 214 comprising an IP header and a TCP header. The source sending device 4 which is configured as an ECN-capable computing device has set the Congestion Experience flag to an initial state (bit of the flag set to zero) corresponding to an absence of congestion. Once the source IP packet 214 has been formed by the sending device 4, it is transmitted to the receiving device 6 via the forward transmission path 208 that passes through the non ECN-capable router 212.

In case of a near congestion experienced at the non ECN-capable router 212 (not shown in the Figure 6) the second module 36 of the receiving device 6 will not detect the near congestion and will not anticipate the need to reduce the sending rate but will let the TCP protocol at the first module level control the congestion by other means.

In case the loss of the packets is caused by transmission errors or a queue overflow, the second module 36 can correct erased packets, anticipate earlier the network congestion when rebuilding the lost packets and prevent congestion by reducing the sending rate of the sending device. Thus the delivery ratio is improved while meeting the Internet equity requirement. In this case upon rebuilding lost packets, for instance the rebuilt packet 216, the second module 36 of the receiving device 6 according to the method of the invention sets the Congestion Experience flag (bit set to 1) in the IP header while keeping the Explicit Congestion notification Echo ECE in the TCP header to the initial state (bit set to 0). Then, the IP layer of the second module 36 of the receiver 6 reports the actually marked CE bit in the ECE flag of the TCP header (ECE bit set to 1) as prescribed by the RFC 3168.

Upon the detection of the Explicit Congestion notification Echo (ECE) flag in the TCP header of the packet 216, the first module 26 of the receiving device 6 generates an acknowledgment packet 218 wherein the Explicit Congestion notification Echo flag is set and sends the acknowledgment packet 218 to the sending device 4 on the return transmitting path.

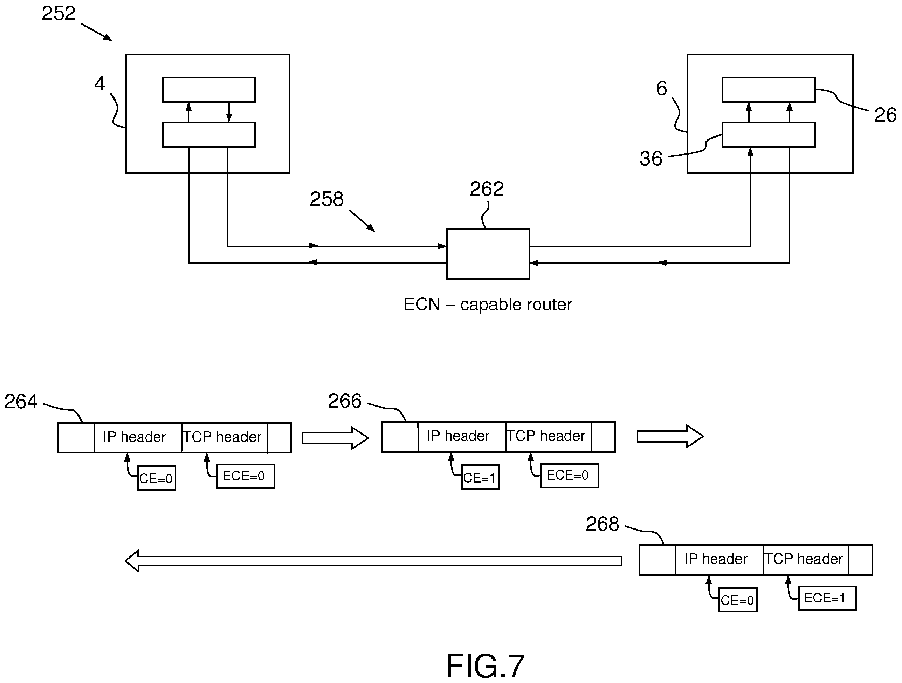

According to Figure 7, the point-to-point transmission method according to the invention as described in Figure 5 combines a second Error Recovery Mechanism ERM #2, for instance an erasure coding/decoding EC scheme, and a TCP/IP Explicit Congestion Notification mechanism. This point-to-point transmission is carried out by a telecommunication system 252, similar to the system 2 of Figure 1. Here, the forward transmission path 258 comprises at least one intermediate network device 262 that is an ECN-capable router.

It is known that during the file overflow of a router some packets are lost and the first module 26 of the receiving device 6 will signal through signaling messages to the source sending device the numbers of the missing packets. The source sending device 4 will reduce then its transmitting rate in order to prevent a future overflow and will transmit again the lost packets. The idea of using the couple TCP/ECN of the mechanisms TCP and ECN is to signal to the source sending device 4 to decrease its transmitting rate before the losses occur. As seen already the Congestion Experienced CE is a data field of the IP header that is set to a Boolean value as a flag and that can be processed by the IP layer of the second module to report the same status in the ECE bit inside the TCP header. Then, the ECE flag (bit set to 1) can be processed by the first module 26 in charge of TCP protocol handling. In the case an intermediate router is compatible with ECN, i.e. is an ECN-capable router, and implements an algorithm of marking the field of the Congestion Experienced CE flag, the intermediate router will mark this CE flag on all the IP packets that will pass through the said intermediate router 262 when its queuing file will reach a predetermined threshold as defined for instance by a network administrator and equal as example to 80% of the queuing file occupation. This CE marking will permit therefore through the ECE the report by the receiving device 6 in its feedback or return messages, i.e. TCP acknowledgments, the source terminal to decrease its transmission rate whereas no loss has been yet observed. Thus this ECN marking mechanism permits to prevent the network congestion. The sending rate decrease permits to avoid the retransmissions and to fluidize the transfers of the packets. It results therefrom that the congestion is anticipated before its occurrence.

The point-to-point transmission method 102 according to the invention is compatible with this ECN marking mechanism and let this mechanism operate when the network is equipped with ECN-capable routers.

As shown in the Figure 7, the source sending device 4 forms a source IP packet 264 comprising an IP header and a TCP header. The source sending device 4 which is configured as an ECN-capable computing device has set the Congestion Experience flag to an initial state (bit of the flag set to zero) corresponding to an absence of congestion. Once the packet 264 has been formed by the sending device 4, it can be transmitted to the receiving device 6 via network communications that can pass through the router 262.

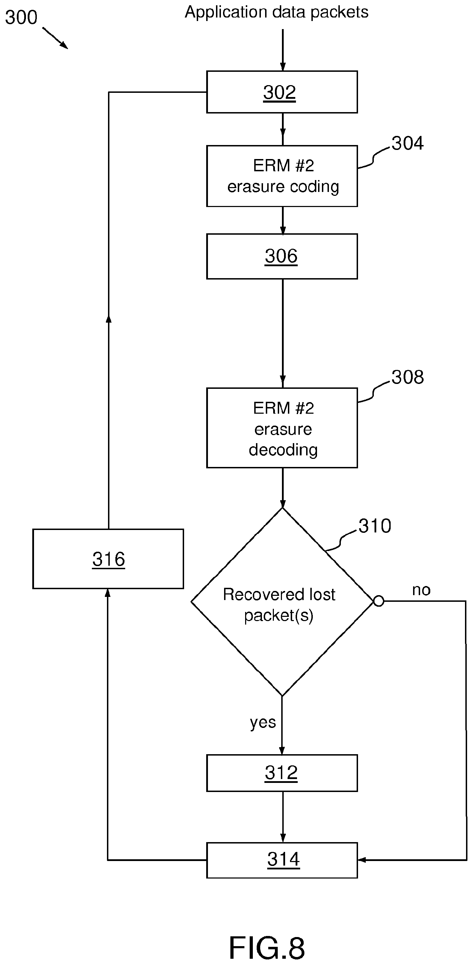

In a first case of congestion detected at the ECN-capable router 262, case considered in the Figure 8, the packet 264 sent by the sending device 4 is altered in a modified packet 266 wherein the Congestion Experienced flag is set (bit set to 1). Then, the IP layer of the second module 36 reports the status of the CE flag in the ECE flag (ECE bit set to 1) inside the TCP header.

Then, assuming that no transmission errors occur, the second module 36 of the receiving device 6 forwards directly the IP decoded modified packet to the first module 26. Then, the first module 26 of the receiving device 6 forms an acknowledgment packet 268 wherein the Explicit Congestion notification Echo ECE flag is set and sends the acknowledgment packet 268 to the return transmission path.

In a second case (not shown) where the loss of packets is caused by transmission errors only, the second module 36 can correct erased packets, anticipate earlier the network congestion and prevent this congestion by reducing the sending rate of the sending device. Thus, the delivery ratio is improved while meeting the Internet equity requirement. In this case upon rebuilding or recovering lost source IP packets, in at least one recovered packet(s), the second module 36 of the receiving device 6 sets the Congestion Experience flag (bit set to 1) in the IP header while keeping the Explicit Congestion notification Echo in the TCP header to the initial state (bit set to 0). Then, the IP layer of the second module 36 reports the status of the CE flag in the ECE flag (ECE bit set to 1) inside the TCP header. Then, upon the detection of Explicit Congestion notification Echo (ECE) flag in the TCP header of the IP packet, the first module 26₁ of the receiver device 6₁ generates an acknowledgment packet 268 wherein the Explicit Congestion notification Echo flag is set and sends the acknowledgment packet 268 to the sending device 4 on the return transmitting path.

According to the Figure 8 and a particular embodiment 300 of the point-to-point transmission method 102 of the Figure 5, the point-to-point transmitting method 302 transmits also a stream of source IP packets on the telecommunication system 2 of Figure 1.

Here, the second Error Recovery Mechanism ERM #2 used by the point-to-point transmitting method 302 is a particular erasure coding/decode scheme of the on-the-fly erasure coding type, for example the on-the-fly erasure coding scheme described in the article of P.U. Tournoux et al.,"On-the-Fly Erasure Coding for a Real-Time Video Applications", in in IEEE Transactions on Multimedia, vol. 13, no. 4, pp. 797-812, Aug. 2011, doi: 10.1109/TMM.2011.2126564.

The transmitting method 300 comprises a set of steps.

In a TCP and first step 302, the first dedicated hardware and/or software module 24 of the sending device 4 receives new incoming source IP application data packet(s) from the sender application layer (not shown in the Figure 8) and TCP acknowledgment packet(s), and processes the new incoming source application data packet(s) and TCP acknowledgment packet(s) according to TCP to generate new or repeated sender TCP/IP packets.

Then, in a second step 304 of implementing a transmit part of the ERM #2 on-the-fly erasure coding, the second dedicated hardware and/or software module 34 of the sending device 4 converts the new or repeated sender TCP/IP packets into source IP packets and/or repair packets on the basis of the ERM #2 on-the-fly erasure coding scheme.

Then, in a third step 306, the sending device 4 sends the source IP packet(s) and/or the repair packet(s) on the forward transmission path 8.

Then, in a fourth step 308 of implementing the ERM #2 on-the-fly erasure decoding, the second dedicated hardware and or software module 36 of the receiving device 6 receives the source IP packet(s) and/or the repair packet(s) sent through the forward transmission path 8, recovers the lost source IP packet(s) by using the decoding scheme of the on-the-fly erasure coding scheme when a successful decoding becomes possible, and keeps ready to be forwarded to the first module 26 or the layer IP stack of the second receiving device 6 the current source IP packet correctly received or the current recovered lost source IP packets.

No repair packet is forwarded by the second module to the first module.

In a subsequent fifth step 310, it is determined by the second module 36 of the receiving device 6 whether the current source IP packet(s) is (or are) source IP packet(s) correctly received or is (or are) recovered packet(s).

When the current decoded source IP packet(s) is or are recovered lost packet(s), in a sixth step 312 the second module 36 of the receiving device 6:
.- either sets an actual Congestion Experienced CE flag in an IP header field of at least one of the recovered IP lost source packet(s) in order to activate the rate reduction at the sending device level, and transmits the recovered IP lost packet(s) with the at least one CE flag set therein to the IP layer of the second module 36₁ for a reporting of the marked ECN bit CE inside an ECN field of the corresponding TCP header; or
.- reports, inside an ECN field of the corresponding TCP header, a virtual marked ECN bit of at least one of the recovered IP lost source packet(s) in order to activate the rate reduction at the sending device level.

Then in the same sixth 312, the second module 36 of the receiving device 6 transmits the recovered TCP lost packet(s) with the actually marked ECN bit CE reported inside the ECN field of the TCP header of the virtually marked ECN bit reported inside the ECN field of the TCP header, or the source TCP/IP packet(s) correctly received.

Then, upon receipt of the recovered TCP lost packet(s) and in a seventh step 314, the first module 26 of the receiving device 6 processes the reporting bit(s) of the actual or virtual marked ECN bit(s) CE set inside the TCP header(s).

Then in an eight step 316, the first module 26 of the receiving device 6 feedbacks these ECN signals to the sending device 4 through the return transmission path 10 following any method compatible with the RFC 3168.

As an example, upon receipt of the recovered TCP lost packet(s) with at least one reporting bit of the actual or virtual marked ECN bit CE set inside the corresponding TCP header(s), the first module 26 of the receiving device determines that the TCP reporting bit of the actual or virtual IP CE flag is set, and in a TCP header of a corresponding acknowledgment packet sets an Explicit Congestion Notification Echo ECN-E flag compliant with the RFC 3168.

Then, the first module 26 of the receiving device 6 transmits the said acknowledgment packet wherein the Explicit Congestion Notification Echo ECN-E flag is set to the source sending device 4 through the return transmission path 10.

Upon receiving the feedback ECN signals, the source sending device 4 takes in the first step 302 prescribed steps to reduce the sending rate at which the source sending device 4 transmits packets, these prescribed steps being compliant with the RFC 3168.

As an example, upon receipt of the acknowledgment packet with the ECE flag set therein the source sending device 4 takes prescribed steps to reduce the sending rate at which the source sending device 4 transmits packets.

When the current source IP packet(s) is or are not recovered lost source IP packets but source IP packet(s) correctly received, the second module 36 of the receiving device 6 forwards directly to the first module 26 or to the IP layer stack of the second module the received decoded current IP packet.

In case the source IP packet correctly received is forwarded directly to the IP layer, there is no altering the logical status of the ECN field corresponding to the Congestion Experienced CE flag in the IP header field of the forwarded current IP packet, and the IP layer executes as prescribed by the RFC 3168 the reporting of the CE bit inside the ECN field of the TCP header.

In case the source IP packet correctly received is forwarded directly to the first module 26, before the forwarding the second module 36 reports the actual CE bit status in the ECN field of the TCP header.

Then, upon receipt of the forwarded decoded current source TCP/IP packet and in a seventh step 34, the first module 26 of the receiving device 6 processes the reporting bit(s) of the actual ECN bits CE set inside the corresponding TCP header(s).

Then in the eight step 316, the first module 26 of the receiving device 6 feed backs these ECN signals to the sending device 4 through the return transmission path 10 following any method compatible with the RFC 3168.

As an example, in case a CE flag has been set by an ECN capable router, the first module 26 of the receiving device 6 detects this set CE flag and in the TCP header of an acknowledgment packet sets an Explicit Congestion notification Echo ECE flag according to an established Explicit Congestion Notification mechanism of the Transport Control Protocol TCP. In case no CE flag has been set previously, the first module 26 of the receiving device 6 does not activate Explicit Congestion notification Echo ECE flag in an acknowledgment packet.

Then, the acknowledgment packet is sent to the sending device 4 in the eight step 316.

According to Figure 8 there is no direct interaction between the on-the-fly erasure coding/decoding algorithm and the TCP protocol. The proposed solution prevents the TCP protocol to decrease its transmitting rate when a loss will be corrected by the erasure on-the-fly coding/decoding algorithm since this algorithm is assumed to correct all the losses caused by transmission errors.

In this architecture the coding/decoding operation is located in the OSI layer model is located below the transport layer. The erasure on-the-fly coding/decoding algorithm can also operate a proxy, the architecture deployment involving no engineering issue.

By combining the management of the ECN field in the IP/TCP fields and the coding/decoding algorithm library numerous possibilities are provided such as:
.- decide or not to have an action on the decrease of the transmission rate of the sending device. Indeed, since TCP does not distinguish between a packet loss caused by congestion and packet loss caused by transmission error, and accordingly TCP protocol decreases the source transmitting rate in both cases, it is advantageous that in the case of a packet loss caused by transmission error, the TCP does not decrease the sending transmission rate in order to improve TCP performance, especially in wireless mobile networks wherein the TCP is known for its poor performance. The fact that the erasure coding/decoding scheme handles the signaling of the ECN mechanism adds some flexibility concerning the use of this ECN mechanism and opens the way to a TCP protocol with greater performance and well suited to mobile networks as example wherein the errors caused by the perturbations on the transmission links are far more frequent.

## Claims

1. A point-to-point transmitting method for transmitting reliably a stream of source IP packets between a source sending device (4; 4₁; 4₂) and a receiving device (6; 6₁; 6₂) through an interconnecting network (12),
the interconnecting network (12) including a forward transmission path (8) from the source sending device (4; 4₁; 4₂) to the receiving device (6; 6₁; 6₂) and a return path (10) from the receiving device (6; 6₁; 6₂) to the source sending device (4; 4₁; 4₂),
the source sending device (4; 4₁; 4₂) being configured for sending source IP packets and/or repair packets,
the receiving device (6; 6₁; 6₂) being configured for receiving the source IP packets and/or the repair packets and recovering source IP packets, ,
the source sending device (4; 4₁; 4₂) and the receiving device (6; 6₁; 6₂) implementing:
.- through the use of a first dedicated hardware and/or software module (24, 26; 24₁, 26₁; 24₂, 26₂) a Transport Control Protocol TCP including an ARQ first error recovery mechanism ERM #1, and
.- through the use of a second dedicated hardware and/or software module (34, 36; 34₁, 36₁; 34₂, 36₂) a second error recovery mechanism ERM #2;
the source sending device (4; 4₁; 4₂) and the receiving device (6; 6₁; 6₂) being compatible to manage an IP Explicit Congestion Notification (ECN) mechanism, and the transmitting method comprising the steps consisting in that:
the second module (34; 34₁; 34₂) of the sending device (4; 4₁; 4₂) converts (104) TCP packet(s) into source IP packets and/or repair packet(s) on the basis of the second error recovery mechanism ERM #2, and sends the said source and /or repair packet(s) on the forward transmission path (8) to the receiving device (6; 6₁; 6₂); then
the second module (36; 36₁; 36₂) of the receiving device (6; 6₁; 6₂) receives the source IP packet(s) and/or the repair packet(s) sent through the forward transmission path (8),
the transmitting method being **characterized in that** it comprises the steps consisting **in that**:
upon receiving a current IP packet when a recovery of one or more IP lost source packets by the second error recovery mechanism ERM #2 is possible the second module (36; 36₁; 36₂) of the receiving device (6; 6₁; 6₂) executes the recovery of the IP lost source packet(s), then
.- either sets an actual Congestion Experienced CE flag in an IP header field of at least one of the recovered IP lost source packet(s) in order to activate the rate reduction at the sending device (4; 4₁; 4₂) level, and transmits the recovered IP lost packet(s) with the at least one CE flag set therein to the IP layer of the second module (36; 36₁) for a reporting of the marked ECN bit CE inside an ECN field of the corresponding TCP header;
.- or reports inside an ECN field of the corresponding TCP header, a virtual marked ECN bit of at least one of the recovered IP lost source packet(s) in order to activate the rate reduction at the sending device (4; 4₁; 4₂) level, and transmits the TCP recovered lost packet(s) with the at least one reporting bit of the virtual marked ECN bit CE set inside the corresponding TCP header(s).

2. The point to point transmitting method according to claim 1 comprising further the steps consisting in that
the first module (26; 26₁; 26₂) of the receiving device (6; 6₁; 6₂) processes the reporting bit(s) of the actual or virtual marked ECN bits CE set inside the corresponding TCP header(s) and feeds back these ECN signals to the sending device (4; 4₁; 4₂) through the return transmission path (10) following a method compliant with the standard the RFC 3168.

3. The point to point transmitting method according to claim 2, wherein after the reporting of the actual or virtual marked ECN bits CE set inside the corresponding TCP header(s) and before the processing of the reporting bit(s), the second module (36; 36₁; 36₂) of the receiving device (6; 6₁; 6₂) transmits the recovered TCP lost packet(s) with the actually marked ECN bit CE reported inside the ECN field of the TCP header or the virtually marked ECN bit reported inside the ECN field of the TCP header, or the source TCP/IP packet(s) correctly received.

4. The point to point transmitting method according to claim 3, wherein upon receipt of the recovered TCP lost packet(s) with at least one reporting bit of the actual or virtual marked ECN bit CE set inside the corresponding TCP header(s), the first module (26; 26₁; 26₂) of the receiving device (6; 6₁; 6₂) determines (114, 314) that the TCP reporting bit of the actual Im or virtual IP CE flag is set, and in a TCP header of a corresponding acknowledgment packet sets (114, 314) an Explicit Congestion Notification Echo ECE flag compliant with the standard RFC 3168, and transmits (116, 316) the acknowledgment packet to the sending source device (4; 4₁; 4₂).

5. The point to point transmitting method according to claim 4, wherein upon receipt of the acknowledgment packet with the ECE flag set, the source sending device (44₁; 4₂) takes (102, 302) prescribed steps to reduce the rate at which it transmits IP packets.

6. The point to point transmitting method according to any of claims 1 to 5, wherein
the second error recovery mechanism ERM #2 is a mechanism comprised in the set of the erasure on-the-fly encoding/decoding algorithms, the block encoding/decoding algorithms, the mere Automatic Repeat reQuest (ARQ) algorithms, and the hybrid Automatic Repeat reQuest (ARQ) control algorithms using Forward Error Coding, and
the first error recovery mechanism ERM #1 is a standard TCP Automatic Repeat reQuest (ARQ) control algorithm.

7. The point to point transmitting method according to any of claims 1 to 6, wherein
upon receiving a current IP packet among a source IP packet and a repair packet, when recovery of one or more IP lost source packets by the second error recovery mechanism ERM #2 is possible, the second module (36₁) of the receiving device (6₁) executes the recovery of the IP lost source packet(s), then sets an actual Congestion Experienced CE flag in an IP header field of at least one of the recovered IP lost source packet(s) in order to activate the rate reduction at the sending device level (4₁), and transmits the recovered IP lost packet(s) with the at least one CE flag set therein to the IP layer of the second module (36₁) for a reporting of the marked ECN bit CE inside an ECN field of the corresponding TCP header.

8. The point to point transmitting method according to any of claims 1 to 6, wherein
upon receiving a current IP packet among a source IP packet and a repair packet, when recovery of one or more IP lost source packets by the second error recovery mechanism ERM #2 is possible, the second module (36₂) of the receiving device (6₂) executes the recovery of the IP lost source packet(s); then reports inside an ECN field of the corresponding TCP header, a virtual marked ECN bit of at least one of the recovered IP lost source packet(s) in order to activate the rate reduction at the sending device level (4₂), and transmits the TCP recovered lost packet(s) with the at least one reporting bit of the virtual marked ECN bit CE set inside the corresponding TCP header(s).

9. The point to point transmitting method according to any of claims 1 to 6, wherein
when the current source IP packet(s) is or are not recovered lost source IP packets but source IP packet(s) correctly received, the second module (36; 36₁; 36₂) of the receiving device (6: 6₁; 6₂) forwards the received decoded current source IP packet to the first module (26; 26₂) either directly or through the standard IP layer stack of the second module (36; 36₁).

10. The point to point transmitting method according to claim 9, wherein
.- in case the source IP packet correctly received is forwarded directly to the IP layer of the second module (36₁) of the receiving device (6₁), there is no altering of the logical status of the Congestion Experienced CE flag inside the IP header field of the forwarded current IP packet, and the IP layer executes as prescribed by the RFC 3168 the reporting of the CE bit inside the ECN field of the TCP header; and
.- in case the source IP packet correctly received is forwarded directly to the first module (26; 26₂), before the said forwarding the second module (36; 36₂) reports the actual CE bit status in the ECN field of the TCP header.

11. A telecommunication system for point-to-point transmitting a stream of source IP packets comprising:
.- a source sending device (4; 4₁; 4₂) for sending source IP packets and /or repair packets(s),
.- a receiving device (6; 6₁; 6₂) for receiving the source IP packet and/or the repair packets and recovering source IP packets,
.- a forward transmission path (8) from the source sending device (4; 4₁; 4₂) to the receiving device (6; 6₁; 6₂), and
.- a return path (10) from the receiving device (6) to the source sending device (4; 4₁; 4₂),
the source sending device (4; 4₁; 4₂) and the receiving device (6; 6₁; 6₂) having each a first dedicated hardware and/or software module (24, 26; 24₁, 26₁; 24₂, 26₂) implementing a Transport Control Protocol TCP including an ARQ first error recovery mechanism ERM #1, and a second dedicated hardware and/or software module (34, 36; 34₁, 36₁; 34₂, 36₂) implementing a second error recovery mechanism ERM #2; and
the source sending device (4) and the receiving device (6) being compatible to manage an IP Explicit Congestion Notification (ECN) mechanism,
the second module (34; 34₁; 34₂) of the source sending device (4; 4₁; 4₂) being configured for:
.- converting TCP packet(s) into source IP packet(s) and/or repair packet(s) on the basis of second error recovery mechanism ERM #2; then
.- sending the source IP and repair packet(s) on the forward transmission path (8) to the receiving device (6; 6₁; 6₂) ;
the second module (36; 36₁; 36₂) of the receiving device (6; 6₁; 6₂) being configured for:
.- receiving the source IP packet(s) and/or the repair packet(s) sent through the forward transmission path (8),
the telecommunications system being **characterized in that**
the second module (36; 36₁; 36₂) of the receiving device (6; 6₁; 6₂) is configured for:
.- upon receiving a current IP packet, when a recovery of one or more IP lost source packets by the second error recovery mechanism ERM #2 is possible, executing the recovery of the IP lost source packet(s), then,
.- either setting an actual Congestion Experienced CE flag in an IP header field of at least one of the recovered IP lost source packet(s) in order to activate the rate reduction at the sending device level (4; 4₁), and transmits the recovered IP lost packet(s) with the at least one CE flag set therein to the IP layer of the second module (36; 36₁) for a reporting of the marked ECN bit CE inside an ECN field of the corresponding TCP header;
.- or reporting inside an ECN field of the corresponding TCP header, a virtual marked ECN bit of at least one of the recovered IP lost source packet(s) in order to activate the rate reduction at the sending device level (4; 4₂), and transmitting the TCP recovered lost packet(s) with the at least one reporting bit of the virtual marked ECN bit CE set inside the corresponding TCP header(s).

12. The telecommunication system according to claim 11, wherein
the first module (26; 26₁; 26₂) of the receiving device (6; 6₁; 6₂) is configured for processing the reporting bit(s) of the actual or virtual marked ECN bits CE set inside the corresponding TCP header(s) and feeding back these ECN signals to the sending device (4; 4₁; 4₂) through the return transmission path (10) following a method compliant with the standard the RFC 3168.

13. The telecommunication system according to claim 12, wherein
the second module (36; 36₁; 36₂) of the receiving device (6; 6₁; 6₂) is configured for, after the reporting of the actual or virtual marked ECN bits CE set inside the corresponding TCP header(s) and before the processing of the reporting bit(s) by the first module (26; 26₁; 26₂) of the receiving device (6; 6₁; 6₂), transmitting the recovered TCP lost packet(s) with the actually marked ECN bit CE reported inside the ECN field of the TCP header or the virtually marked ECN bit reported inside the ECN field of the TCP header, or the source TCP/IP packet(s) correctly received to the first module (26; 26₁; 26₂) of the receiving device (6; 6₁; 6₂).

14. The telecommunication system according to claim 13, wherein
the first module (26; 26₁; 26₂) of the receiving device (6; 6₁; 6₂) is configured for, upon receipt of the recovered TCP lost packet(s) with at least one reporting bit of the actual or virtual marked ECN bit CE set inside the corresponding TCP header(s), determining that the TCP reporting bit of the actual Im or virtual IP CE flag is set, and in a TCP header of a corresponding acknowledgment packet setting an Explicit Congestion Notification Echo ECE flag compliant with the standard RFC 3168, and transmitting the acknowledgment packet to the sending source device (4; 4₁; 4₂).

15. The telecommunication system according to claim 14, wherein
the source sending device (4; 4₁; 4₂) is configured for, upon receipt of the acknowledgment packet with the ECE flag set, taking prescribed steps to reduce the rate at which it transmits IP packets.

16. The telecommunication system according to any of claims 11 to 15, wherein
the second error recovery mechanism ERM #2 is a mechanism comprised in the set of the erasure on-the-fly encoding/decoding algorithms, the block encoding/decoding algorithms, the mere Automatic Repeat reQuest (ARQ) algorithms, and the hybrid Automatic Repeat reQuest (ARQ) control algorithms using Forward Error Coding, and
the first error recovery mechanism ERM #1 is a standard TCP Automatic Repeat reQuest (ARQ) control algorithm.
